# EUROPEAN PATENT APPLICATION

(11) **EP 4 531 158 A1**
(43) Date of publication of application: **02.04.2025**
(21) Application number: 23200024.0
(22) Date of filing: 27.09.2023
(51) Int. Cl.: H01M 10/0565, C09J 7/30

(54) **PRESSURE SENSITIVE ADHESIVE ELECTROLYTE**

(71) Applicant: TESA SE, 22848 Norderstedt (DE)
(72) Inventor: HASAN, Dr. Nazmul, 22848 Norderstedt (DE)
(74) Representative: tesa SE

(57) **Abstract**

A pressure sensitive adhesive electrolyte (PSAE) was prepared by polymerizing:
• 4 - 86 wt % of acrylate monomer (a1) from the group of the (meth)acrylic esters having 4 - 44 carbon atoms and containing at least one oxygen atom,
• 0.5 - 50 wt % of acrylate monomer (a2) from the group of the (meth)acrylic esters or amides having 4-25 carbon atoms and containing at least one nitrogen atom,
• 0.005 - 10 wt % of at least one initiator, wherein the at least one initiator is preferably a thermal initiator and/or a photoinitiator, especially preferably at least one photoinitiator,
• 0 - 35 wt % of conducting salt,
• 2 - 60 wt % of ionic liquid,
• optionally further additives like plasticizer, antioxidant, tackifier, chain transfer agent, as for example 0 to 50 wt %,
where optionally one or more of the components are added at least proportionally, as for example completely, only during or after the polymerization. With such PSAE conductivities according to the invention an ionic conductivity by test B of more than 10⁻⁶ S/cm up to at least 10⁻³ S/cm, can be achieved and the PSAE is suitable for applications like electrochromic cells/dimming foils and PSA with electrically debonding function.

## Description

The invention relates to a pressure sensitive adhesive electrolyte and to a method for producing the pressure sensitive adhesive electrolyte in the form of an adhesive tape to allow it to be processed more easily in the form of known liquid or solid electrolytes into complete electrochemical systems or cells such as batteries, capacitors, sensors or electrochromic cells. These electrochemical systems or cells consist in general of support materials, current collectors, anode materials, cathode materials and the electrolytes.

Electrolytes are nowadays widespread in a variety of applications, ranging from primary and secondary batteries through to electrochromic applications, i.e. to their use in electrochromic systems.

Electrolytes are ionic substances that often exist in liquid form such as solution of acid/base/salt. Under the external influence of an electrical field, the ions move through the solution resulting in an ionic current. Electrolytes are typically prepared by dissolving ionic compounds in a solvent. They can also be prepared in solid form by utilizing polymers or inorganic materials such as ceramic as a solid matrix. The possible surrounding matrix (polymer, inorganic material, ceramic, film) is also often referred to together with the dissociated chemical compound (conducting salt) as an electrolyte. The latter, more comprehensive definition will be used below.

The electrolytes are applied between two half electrochemical cells to construct batteries, electrochromic cells or sensors. One of the core functions of the electrolyte is to ensure charge balancing during an electrochemical reaction by supplying ions as well as preventing the direct flow of electrons through the half cells.

Electrolytes must possess some properties like higher ion conductivity for faster response, better adhesion to the half cells to mitigate interfacial resistance, and wide electrochemical windows to ensure long-term stability.

The ion conductivity mainly depends on the number of ions and their mobility. For solid state polymer electrolytes, the ion mobility is influenced by the ion size and the chain dynamic of the polymer. For example, bulky groups may prevent crystallization of the polymer but will negatively affect the ion conductivity.

All electrolytes known or present for the separation of the half-cells have a significant disadvantage: they must be assembled with the half-cells by costly and inconvenient processes and product designs. On top of that, they are mostly used in liquid form, which has risks for leakage, flammability, and a narrow temperature range, as well as having limited uses for wearable electronics.

Known from the prior art are electrolytes which are to be assembled, for example, mechanically, with the sheetlike or weblike materials being clamped, wound firmly with corresponding web tension, or bonded at the sides to a third material. Also known are electrolytes which themselves take on the function of an adhesive, by chemically curing after assembly of the half-cells. They are applied in liquid form to one half-cell, assembled with the second half-cell and subsequently cured. The curing is initiated either thermally or by means of actinic radiation such as UV radiation for example.

A disadvantage is that the curing represents a cost-intensive extra process step, which requires time, development effort and complicated process engineering and process monitoring techniques. Furthermore, the assembly of the half-cells in batteries or electrochromic systems by means of the viscous liquid electrolyte leads to considerable fluctuations in thickness, which prevent a product design with an exactly defined thickness and hence also product properties. Particularly in the case of wound (cylindrical cells) or folded (pouch cells) multi-layer constructions of the functional layers (current collectors, anode materials, cathode materials, electrolytes), the in-process control of a homogeneous layer construction is not possible, and costly rejects are the result. In order to reduce rejects, attempts are made in some cases to inject uncured electrolyte prepolymer ("syrup") into the cell after winding, and then to cure it. Even with this process, however, it is not possible to monitor or precisely control the layer thickness.

As well as simple production and ease of application, there are other important properties of the electrolyte: high ionic conductivity over a wide temperature range, cycling stability, fire safety, optical transparency, no adverse effect on health, the possibility of reuse, and chemical stability with respect to the other active materials. Moreover, the greater the proportion of polymer (e.g. PMMA) in the mixture, the lower the ionic conductivity. If the polymer fraction is too small, the dimensional stability is no longer sufficient to reliably prevent mechanical damage and short-circuits, so requiring the additional introduction into the electrolyte layer of a porous film membrane, which complicates the process and makes it more expensive.

In standard procedures, gel polymer electrolytes (GPEs) are made on the basis of polyethylene oxide (PEO), polymethyl methacrylate (PMMA), polyacrylonitrile (PAN) or polyvinylidene fluoride-hexafluoropropylene (PVDF-HFP) (Dong Zhou, Li-Zehn Fan, Huanhuan Fan, Qiao Shi: Electrochemical performance: Electrochemical performance of trimethylolpropane-trimethylacrylate-based GPE prepared by in situ thermal polymerization; Electrochimica Acta 89:334-338, Feb. 2013). Usually very high fractions of plasticizer/conducting salt mixtures up to 97% are used in order to achieve a high ionic conductivity. These polymer electrolytes have low dimensional stability, and so cannot be wound to large jumbo rolls without oozing, and, while they may have weak tack, they also have no cohesion or adhesion and are therefore not suitable for the bonding of electrochemical half-cells. In the examples designated, the porous film support Celgard 2400 (Celgard LLC, USA) is additionally employed in order to produce a practicable cell.

Conducting salts are known for example from DE 10 2014 108 012 A1, such as lithium [3,5-bis(trifluoromethyl)pyrazolide] or LiTFSI. Using these conducting salts, it is possible to produce chemically inert liquid and polymer electrolytes which are stable towards hydrolysis. DE 10 2008 062 129 A1 describes a pressure sensitive adhesive with a high permittivity, which possesses a high glass transition temperature.

EP 3 910 715 A1 discloses a pressure sensitive adhesive electrolyte based on polymers comprising alkyl(meth)acrylates, alkyl(meth)acrylates with at least one heteroatom and a conducting salt. The composition further comprises solvents as well as low flash point plasticizers.

EP 2 570 846 A1 discloses an electrolyte based on branched polyethoxide polymers, which are crosslinked. The electrolyte may contain an ionic liquid.

One problem of the prior art is still the lack of good conductivity. Also the compositions are not suitable for roll-to-roll processing under ambient conditions as well as contain flammable solvents. The compositions often require special conditions like specific protective atmosphere.

Also the long-term stability and safety is important for such a composition. It should not emit toxic compounds or degrade over time.

It is an object of the present invention at least partly to overcome the aforesaid disadvantages and to provide an electrolyte which has permanent tack e.g., self-adhesive ("pressure sensitive adhesive"), and has a defined thickness, and which shows an improved ion conductivity, can also easily be debondable on demand and is easily roll-to-roll processable.

It is an object of the invention, moreover, to provide an electrolyte which can be applied easily in the production process by lamination to the first half-cell and can be joined by lamination to the second half-cell to construct electrochemical devices, especially electrochromic devices. On top of that, the adhesive can be easily debonded or debondable on demand by applying a certain DC voltage for a short period of time above the electrochemical window of the electrolytes. This will provide a better separation pathway of the electrochemical cells after their end-of-life. The adhesive can also be used in such applications where easy and selective delamination is needed without damaging the substrates.

The object is achieved by means of a pressure sensitive adhesive electrolyte (PSAE) having the features of Claim 1, prepared by polymerizing a mixture comprising at least the following components:
- 4 - 86 wt %, preferably 12 - 77 wt %, more preferably 20 - 60 wt % of acrylate monomer (a1) from the group of the (meth)acrylic esters having 4 - 44 carbon atoms and containing at least one oxygen atom,
- 0.5 - 50 wt %, preferably 1 - 40 wt %, more preferably 5 - 35 wt % even more preferably 5 to 25 wt % of acrylate monomer (a2) from the group of the (meth)acrylic esters or amides having 4 - 25 carbon atoms and containing at least one nitrogen atom,
- 0.005 - 10 wt %, preferably 0.005 - 5 wt %, more particularly 0.01 - 3 wt % of at least one initiator, wherein the at least one initiator is preferably a thermal initiator and/or a photoinitiator, especially preferably at least one photoinitiator,
- 0 - 35 wt %, preferably 0 - 30 wt %, more particularly 0 - 25 wt % of conducting salt,
- 2 - 60 wt %, preferably 5 - 50 wt %, more particularly 5 - 40 wt % of ionic liquid,
- optionally further additives like plasticizer, antioxidant, tackifier, chain transfer agent, as for example 0 to 50 wt %, preferably 0 to 40 wt % and more particularly 0 to 30 wt %,
- where optionally one or more of the components are added at least proportionally, as for example completely, only during or after the polymerization.

All weight ratios are chosen to add up to 100 wt %.

Preferred embodiments of the electrolyte are also found in the dependent claims. The PSAE of the invention is a pressure sensitive adhesive polymer electrolyte.

With the inventive PSAE conductivities according to the invention an ionic conductivity by test B of more than 10⁻⁶ S/cm upto at least 10⁻³ S/cm, can be achieved.

In a preferred embodiment the peel adhesion as measured with test A described in the examples is at least 0.1 N/cm, preferably at least 0.2 N/cm, even more preferably of at least 0.5 N/cm, preferably additionally not more than 10 N/cm. In a preferred embodiment the peel adhesion as measured in test A is from 0.2 to 10 N/cm, preferably 0.5 to 10 N/cm, even more preferably 0.5 to 6 N/cm.

In accordance with the present specification, the only valid solvents (compounds) are solvents which at atmospheric pressure, i.e. 1013 mbar, have a boiling point of less than 100°C. Solvents having a boiling point at 1013 mbar of 100°C or more, and solvents which have no boiling point at 1013 mbar, instead decomposing at 100°C or more, are considered by contrast to be plasticizers for the purposes of the present specification. When the weight fractions of the components are stated, in accordance with the invention, the solvent is disregarded, but not plasticizers. If solvent is used in the sense of the present specification for the polymerization of the invention, it is preferably substantially removed after the polymerization, particularly since, because of the low boiling point, the solvent may adversely affect the stability of the electrolyte and of the subsequent electrochemical cell. Unlike monomers solvents do not participate in the polymerization and form the polymer.

In a preferred embodiment the mixture is free of solvents, especially also during polymerization. Surprisingly it was found that the conducting salts could be dissolved in the composition without the use of solvents.

Components optionally added only during or after the polymerization are of course already included in the specified weight fractions.

In accordance with the present invention, the term "(meth)acrylic esters" encompasses both methacrylic esters and acrylic esters. Such esters (R^{E}₂C=CR^{E}-C(=O)O-R^{A}) are derived from an (meth)acrylic acid and an alcohol and therefore comprise an acid component (R^{E}₂C=CR^{E}-C(=O)O), wherein R^{E} is a group attached to the ester component, like alkyl groups or hydrogen, and an alcohol component (R^{A}). The number of carbon atoms in the (meth)acrylic esters, moreover, is based in each case on the entire molecule, i.e. the acid component and alcohol component of the ester together.

In the acrylate monomer (a1) from the group of the (meth)acrylic esters having 4 - 44 carbon atoms and containing at least one oxygen atom, the monomer contains preferably at least two oxygen atoms. To the skilled person it is clear that the at least one oxygen atom in the acrylate monomer is present in addition to the two O atoms (oxygen atoms) of the ester functionality, i.e. (C=O)O. The at least one oxygen atom is typically present in the hydrocarbon part of the alcohol component of the (meth)acrylic ester.

In the acrylate monomer (a2) from the group of the (meth)acrylic esters or amides having 4 - 25 carbon atoms and containing at least one nitrogen atom, the monomer is preferably an (meth)acrylic amide, more preferred an acrylic amide. In case of an (meth)acrylic amide the nitrogen atom of the amide is counted as one nitrogen atom. In case of an ester the at least one nitrogen atom is typically present in the hydrocarbon part of the alcohol component of the (meth)acrylic ester.

In a preferred embodiment the composition does comprise only acrylate monomers comprising at least one heteroatom apart from the heteroatoms of the (meth)acrylic ester or (meth)acrylic amide functionality.

The acrylate monomer (a1) may comprise one or more monomers. The same is true of the acrylate monomer (a2). Through the selection of suitable acrylate monomers to be polymerized, and their amount, it is possible, moreover, to tailor properties such as the glass transition temperature T_{g} and the polarity of the pressure sensitive adhesive electrolyte. It is also possible that the further monomers are present.

The electrolyte of the invention can be used in batteries, capacitors, but also in transparent electrochromic systems, since the electrolyte of the invention exhibits only minimal ageing phenomena, hence remaining chemically stable for a long time, have good ion conductivity and enables stable and weathering-resistant bonding even on outdoor use for years, at the same time retaining its high-grade transparent optical properties. This stability is possible owing to the finding of monomers, conducting salts and, where used, plasticizers which in the combination according to the invention do not interact with UV light and have a propensity towards decomposition reactions. On top of that, the electrolyte can also be used as an electrically debondable pressure sensitive adhesive (ED-PSA) due to the presence of electroactive material like ionic liquid.

The objects are achieved, moreover, by a method for producing the pressure sensitive adhesive electrolyte of the invention. In the method a mixture is polymerized which comprises at least the following components:
- 4 - 86 wt %, preferably 12 - 77 wt %, more preferably 20 - 60 wt % of acrylate monomer (a1) from the group of the (meth)acrylic esters having 4 - 44 carbon atoms and containing at least one oxygen atom,
- 0.5 - 50 wt %, preferably 1 - 40 wt %, more preferably 5 - 35 wt %, even more preferably 5 to 25 wt % of acrylate monomer (a2) from the group of the (meth)acrylic esters or amides having 4 - 25 carbon atoms and containing at least one nitrogen atom,
- 0.005 - 10 wt %, preferably 0.005 - 5 wt %, more particularly 0.01 - 3 wt % of at least one initiator, wherein the at least one initiator is preferably a thermal initiator and/or a photoinitiator, especially preferably at least one photoinitiator,
- 0 - 35 wt %, preferably 0 - 30 wt %, more particularly 0 - 25 wt % of conducting salt,
- 2 - 60 wt %, preferably 5 - 50 wt %, more particularly 5 - 40 wt % of ionic liquid,
- optionally further additives like plasticizer, antioxidant, tackifier, chain transfer agent, as for example 0 to 50 wt %, preferably 0 to 40 wt % and more particularly 0 to 30 wt %,
where optionally one or more of the components are added at least proportionally, as for example completely, only during or after the polymerization.

All weight ratios are chosen to add up to 100 wt %.

In accordance with the invention the solvent is disregarded when stating the weight fractions of the components.

The invention relates, moreover, to a pressure sensitive adhesive tape comprising at least one layer of the pressure sensitive adhesive electrolyte of the invention, with the pressure sensitive adhesive tape being preferably double-sided adhesive, i.e. being a double-sided adhesive tape, and more particularly an adhesive transfer tape. The general expression "adhesive strip" (pressure sensitive adhesive strip), synonymously also "adhesive tape" (pressure sensitive adhesive tape), in the sense of this invention encompasses all sheetlike structures such as two-dimensionally extended films or film sections, tapes with extended length and limited width, tape sections and the like, and lastly also die-cuts or labels. The pressure sensitive adhesive tape therefore has a lengthwise extent (x-direction) and a widthwise extent (y-direction). The pressure sensitive adhesive tape also has a thickness (z-direction) extending perpendicularly to both extents, with the widthwise extent and lengthwise extent being greater by a multiple than the thickness. The thickness is as far as possible the same, preferably exactly the same, over the entire areal extent of the pressure sensitive adhesive tape, determined by length and width. The pressure sensitive adhesive tape of the invention is more particularly in web form. A web is understood to mean an object whose length (x-direction extent) is greater by a multiple than the width (y-direction extent), and the width along the entire length remains roughly and preferably exactly the same. The exposed surfaces of the pressure sensitive adhesive tape may advantageously be furnished with materials having an anti-adhesive coating on both sides, such as a release paper or a release film, also called liner, as a temporary carrier. A liner (release paper, release film) is not part of a pressure sensitive adhesive tape, but merely an aid to its production, storage and/or further processing by die-cutting. Furthermore, unlike an adhesive tape carrier, a liner is not joined fixedly to a layer of adhesive. The pressure sensitive adhesive tape preferably consists of a single layer of the pressure sensitive adhesive electrolyte of the invention, and so the pressure sensitive adhesive tape constitutes a single-layer system. A single-layer, double-sided self-adhering, i.e. pressure sensitive adhesive tape, i.e. double-sided adhesive tape of this kind is also referred to as a "transfer tape".

The invention relates, moreover, to a product roll comprising (a) a roll core and (b) in web form, a pressure sensitive adhesive electrolyte of the invention or a pressure sensitive adhesive tape of the invention, with the pressure sensitive adhesive electrolyte or the pressure sensitive adhesive tape being wound in multiple plies in the form of an Archimedean spiral on the roll core.

The invention relates, moreover, to the use of the pressure sensitive adhesive electrolyte or pressure sensitive adhesive tape of the invention in an energy storage device, like battery, capacitor, sensors like capacitive touch sensors, gas sensors, pressure sensors, electrically debondable pressure sensitive adhesive (ED-PSA) application, electrochromic display applications; electrochromic wearables like textiles, sunglasses, VR headsets, and watches; electrochromic packaging/labels, smart applications like electrochromic glazing system, electrochromic dimming film or foil, smart windows, smart textiles, actuators, electrochemiluminescence. The preferred uses are electrochromic systems and electrically debondable adhesive (ED-PSA).

The PSAE of the invention have especially the following advantages over the prior art:
- tacky
- flexible
- lightweight
- free of solvents
- easy to process
- free of acrylic acids
- high thermal stability
- high ionic conductivity
- good interfacial contact
- optically clear (some are slightly translucent)

A further subject of the invention is an electrochromic system comprising a first half-cell A and a second half-cell B, with the two half-cells A and B being joined to one another over the full area or a partial area by way of a pressure sensitive adhesive electrolyte of the invention or a pressure sensitive adhesive tape of the invention, where preferably the first half-cell A has a sheetlike, electrically conductively coated polymer or glass substrate body with an anode material applied partially or over the full area on the conductively coated side, and the second half-cell B likewise has a sheetlike and electrically conductively coated polymer or glass substrate body with a cathode material applied partially or over the full area on the electrically conductively coated side.

The invention relates, furthermore, to a method for producing an electrochromic system, wherein a first half-cell A and a second half-cell B are joined to one another to form an electrochromic system by lamination of a pressure sensitive adhesive electrolyte of the invention or by reactive lamination of liquid electrolyte according to the invention or of a pressure sensitive adhesive tape of the invention, where the half-cells A and B are preferably as defined above.

The PSAE of the invention allows much faster switching times (e.g., changing color to bleach state or vice versa) than systems without ionic liquids.

The invention also relates generally, furthermore, to constructions and methods for constructing electrochemical cells as described above, where two half-cells are joined by the electrolyte of the invention. These electrochemical cells are also referred to as batteries but the intention is to store and delivery electrical energy. In that case the half-cells A and B are optimized to be able to accommodate a large amount of the cation. Examples of suitable anode material include graphite formulations or metallic lithium, applied to a conductive electrode which in this case is not necessarily transparent. An example of a suitable cathode material is a lithium iron phosphate formulation admixed with small amounts of graphite and polyvinylidene fluoride/polyhexafluoropropylene mixture (binder). Diverse anode and cathode materials for cell manufacture are widely known to the skilled person.

Optimal performance requires that the pressure sensitive adhesive electrolyte polymer matrix have an extremely high permittivity, to allow it to dissolve the conducting salts therein at sufficiently high concentration. For this purpose, in particular, the cations must be mobile and dissociated, while the associated anions can be mobilized by the polymer matrix. A low viscosity as well, including at low temperatures, is beneficial to the mobility of the cations.

Electrolytes of the invention are self-adhesive (tacky), i.e. pressure sensitive adhesive, and have a solid structure with a defined thickness, and can be joined to the half-cell components by simple lamination directly in a simple process step. The complexity of the overall systems is lower if there is no need for curing after the joining of the half-cells. The absence of chemically active components eliminates the risk of unwanted side-reactions with active components of other half-cell active materials. Preferably the electrolytes of the inventions are cured after joining the half-cells, used as reactive pressure sensitive adhesive (reactive lamination).

The electrolyte of the invention is pressure sensitive adhesive, so constituting a pressure sensitive adhesive - both as a chemically inert system which requires no further curing, and as a reactive pressure sensitive adhesive whose lamination can be followed by a curing process.

A pressure sensitive adhesive or adhesive composition is understood in the invention, as is customary in the general usage, as a material which at least at room temperature is permanently tacky and also adhesive. A characteristic of a pressure sensitive adhesive is that it can be applied by pressure to a substrate and remains adhering there, with no further definition of the pressure to be applied or the period of exposure to this pressure. In general, though in principle dependent on the precise nature of the pressure sensitive adhesive and also on the substrate, the temperature and the atmospheric humidity, the influence of a minimal pressure of short duration, which does not go beyond gentle contact for a brief moment, is enough to achieve the adhesion effect, while in other cases a longer-term period of exposure to a higher pressure may also be necessary.

Pressure sensitive adhesives have particular, characteristic viscoelastic properties which result in the permanent tack and adhesiveness. A feature of these adhesives is that when they are mechanically deformed, there are processes of viscous flow and there is also development of elastic forces of recovery. The two processes have a certain relationship to one another in terms of their respective proportion, in dependence not only on the precise composition, the structure and the degree of crosslinking of the pressure sensitive adhesive, but also on the rate and duration of the deformation, and on the temperature.

The proportional viscous flow is necessary for the achievement of adhesion. Only the viscous components, frequently brought about by macromolecules with relatively high mobility, permit effective wetting and effective flow onto the substrate where bonding is to take place. A high viscous flow component results in high pressure sensitive adhesiveness (also referred to as tack or surface stickiness) and hence often also in high adhesion. Highly crosslinked systems, crystalline polymers, or polymers with glasslike solidification lack flowable components and are in general devoid of tack or possess only little tack at least.

The proportional elastic forces of recovery are necessary for the achievement of cohesion. They are brought about, for example, by very long-chain macromolecules with a high degree of coiling, and also by physically or chemically crosslinked macromolecules, and they allow the transmission of the forces that act on an adhesive bond. As a result of these forces of recovery, an adhesive bond is able to withstand a long-term load acting on it, in the form of a sustained shearing load, for example, to a sufficient degree over a relatively long time period.

### Monomers (a1)

The monomer (a1) is an acrylate monomer from the group of the (meth)acrylic esters having 4 - 44 carbon atoms and containing at least one oxygen atom. The monomer contains preferably at least two oxygen atoms, even more preferably 2 to 20 oxygen atoms and preferably having 7 to 44 carbon atoms. To the skilled person it is clear that the at least one oxygen atom (or the at least two oxygen atoms) in the acrylate monomer is (are) present in addition to the two O atoms (oxygen atoms) of the ester functionality, i.e. (C=O)O. The at least one oxygen atom is typically present in the hydrocarbon part of the alcohol component of the (meth)acrylic ester.

In a preferred embodiment the monomer (a1) is from the group of (meth)acrylic esters, more preferably having 4 to 30 carbon atoms and comprising at least one oxygen atom, more preferred 8 to 30 carbon atoms and at least 2 oxygen atoms. Preferred (meth)acrylic esters, wherein the hydrocarbon part of the alcohol component is a straight-chain or branched alkyl group, wherein at least on non-adjacent CH₂ group is replaced by O.

In a preferred embodiment the hydrocarbon part of the alcohol component is based on polyethylene oxide (PEO). The PEO can be linear or branched, preferably linear. In a preferred embodiment the monomer (a1) is based on the formula (1) 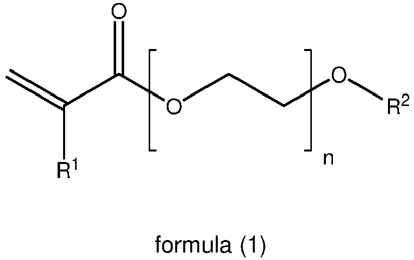 wherein R¹ is H or CH₃, R² is H, -C(=O)CH₂C(=O)CH₃, CH₃ or CH₂CH₃, preferably CH₃ or CH₂CH₃, and n is an integer between 1 and 18, preferably 1 and 15, more preferably 2 and 11. In a preferred embodiment at least one monomer (a1) used has a value between 1 and 5, preferably 2 and 4. Preferred are monomers, which are liquid at 25 °C.

Examples of the (meth)acrylic esters include 2-(2-ethoxyethoxy)ethyl acrylate) (EEEA, also designated as EDGA, n=2, R¹=CH³, R²=CH₂CH₃), 2-[2-(2-methoxyethoxy)ethoxy]ethyl acrylate (n=3, R¹=H, R²=CH₃), diethylene glycol monomethyl ether methacrylate (n=2, R¹=CH³, R²=CH₃), 2-ethoxyethyl methacrylate (n=1, R¹=CH³, R²=CH₂CH₃), 2-methoxyethyl methacrylate (n=1, R¹=CH³, R²=CH₃) and ethylene glycol monoacetoacetate monomethacrylate (n=1, R¹=CH³, R²=-C(=O)CH₂C(=O)CH₃).

### Monomers (a2)

The monomer (a2) is an acrylate monomer from the group of the (meth)acrylic esters or amides having 4 - 25 carbon atoms and containing at least one nitrogen atom, preferably 5 to 15 carbon atoms, more preferably 5 to 9. Those ranges refer to the (meth)acrylic esters and (meth)acrylic esters amides. The monomer (a2) is a monomer having at least one nitrogen atom within the molecule and may have one nitrogen atom or two or more nitrogen atoms. Moreover, because the monomer (a2) has an (meth)acrylic functionality within the molecule, the monomer (a2) is a monofunctional monomer. The monomer (a2) is a component copolymerizable with the monomer (a1). In the monomer mixture, the monomer (a2) may be contained alone, or two or more thereof may be contained in combination. In the present invention, by use of the monomer (a2), a proper degree of polarity can be given to the acrylic copolymer. This can provide a pressure sensitive adhesive sheet that keeps a high adhesive force and adhesion reliability (particularly, repulsion resistance and holding power) when the sheet is bonded, and can be easily peeled off from an adherend when the sheet is peeled.

The monomer (a2) is not particularly limited.

In a preferred embodiment the monomer (a2) is liquid at 25 °C.

Examples of the (meth)acrylamides include (meth)acrylamide, N-alkyl (meth)acrylamide, and N,N-dialkyl (meth)acrylamide. Examples of the N-alkyl (meth)acrylamide include N-methyl (meth)acrylamide, N-ethyl (meth)acrylamide, N-n-butyl (meth)acrylamide, and N-octyl acrylamide. Further, examples thereof include amino group-containing (meth)acrylamides such as dimethylaminoethyl (meth)acrylamide and diethylaminoethyl (meth)acrylamide. Next, examples of the N,N-dialkyl (meth)acrylamide include N,N-dimethyl (meth)acrylamide, N,N-diethyl (meth)acrylamide, N,N-dipropyl (meth)acrylamide, N,N-diisopropyl (meth)acrylamide, N,N-di(n-butyl) (meth)acrylamide, and N,N-di(t-butyl) (meth)acrylamide.

Further, examples of the (meth)acrylamides also include cyclic (meth)acrylamides having an N-acryloyl group such as (meth)acryloyl morpholine (like 4-acryloylmorpholine), (meth)acryloyl pyrrolidone, and (meth)acryloyl pyrrolidine.

Further, examples of the (meth)acrylamides also include N-dialkylaminoalkyl (meth)acrylamide monomers having an N-dialkylaminoalkyl group such as N-[3-(Dimethylamino)propyl]acrylamide, N-[2-(Dimethylamino)ethyl]acrylamide, N-[2-(Diethylamino)ethyl]-acrylamide.

Further, examples of the (meth)acrylamides include N-hydroxylalkyl (meth)acrylamide monomers having a hydroxyalkyl group having 1 to 4 carbon atoms.

Examples of the N-hydroxylalkyl (meth)acrylamide monomers having a hydroxyalkyl group having 1 to 4 carbon atoms include N-methylol (meth)acrylamide, N-(2-hydroxyethyl)acrylamide, N-(2-hydroxyethyl)methacrylamide, N-(2-hydroxypropyl)acrylamide, N-(2-hydroxypropyl)methacrylamide, N-(1-hydroxypropyl)acrylamide, N-(1 - hydroxypropyl)methacrylamide, N-(3-hydroxypropyl)acrylamide, N-(3-hydroxypropyl)methacrylamide, N-(2-hydroxybutyl)acrylamide, N-(2-hydroxybutyl)methacrylamide, N-(3-hydroxybutyl)acrylamide, N-(3-hydroxybutyl)methacrylamide, N-(4-hydroxybutyl)acrylamide, N-(4-hydroxybutyl)methacrylamide, and N-methyl-N-2-hydroxyethyl(meth)acrylamide.

Further examples of the monomer (a2) are ethers of the previously mentions N-hydroxyalkyl (meth) acrylamide monomers, preferable methyl, ethyl, propyl or butyl ether like N-(methoxymethyl)methacrylamide or N-(butoxymethyl)acrylamide.

Further, examples of the monomer (a2) other than the (meth)acrylamides include monomers having an amino group such as aminoethyl (meth)acrylate, N,N-dimethylaminoethyl (meth)acrylate, and N,N-dimethylaminopropyl (meth)acrylate; monomers having a maleimide skeleton such as N-cyclohexylmaleimide and N-phenylmaleimide; itaconimide monomers such as N-methylitaconimide, N-ethylitaconimide, N-butylitaconimide, N-2-ethylhexylitaconimide, N-laurylitaconimide, and N-cyclohexylitaconimide; cyanoacrylate monomers such as acrylonitrile and methacrylonitrile; and succinimide monomers such as N-(meth)acryloyloxymethylenesuccinimide, N-(meth)acryloyl-6-oxyhexamethylenesuccinimide, and N-(meth)acryloyl-8-oxyoctamethylenesuccinimide.

As the monomer (a2), preferred are (meth)acrylamides having one or two N-alkyl groups having 1 to 4 (more preferably 1 or 2) carbon atoms (for example, N,N-dialkyl acrylamides such as N,N-diethylacrylamide, and N,N-dimethylacrylamide); and N-(2-hydroxyethyl)acrylamide, N-(2-hydroxyethyl)methacrylamide, and N-(2-hydroxypropyl)methacrylamide from the viewpoint of a balance between adhesion reliability and flexibility of the adhesive layer (adhesive layer in the present invention) comprised of the adhesive composition in the present invention. Particularly, as the monomer (a2), preferred is N,N-dimethylacrylamide.

If the content of the monomer (a2) is controlled within the range, a high adhesive force and adhesion reliability (particularly, repulsion resistance and holding power) are maintained when the PSAE is bonded. On the other hand, at a content less than 1% by weight, processability may be reduced or adhesion reliability is lower, whereas at a content more than 20% by weight the conductivity is reduced.

### Photoinitiators

The mixture for polymerization in the invention, which forms the basis for the pressure sensitive adhesive electrolyte of the present invention, comprises 0.005 - 10 wt %, preferably 0.005 - 5 wt %, more particularly 0.01 - 3 wt % of initiator, preferably thermal initiator and/or photoinitiator, more preferably photoinitiator. The photoinitiator typically comprises a UV initiator. Accordingly, the polymerization taking place in accordance with the invention is preferably a UV polymerization. If a mixture of two or more initiators is used, the above weight fractions are based typically on the total amount of the initiators. The initiator used in the invention is preferably an initiator which initiates a radical polymerization. Accordingly, the polymerization taking place in accordance with the invention is preferably a radical polymerization.

The UV polymerization for syrup preparation and/or on the coated-out web may take place, for example, with the following photoinitiators, i.e. light-active initiators: 2,2-dimethoxy-2-phenylacetophenone (DMPA, 340 nm, 250 nm, Irgacure 651), 1-Hydroxy-cyclohexyl-phenyl-ketone (Irgacure 184), 2,4,6-trimethylbenzoyldiphenylphosphine oxide (BAPO, 295 nm, 370 nm), iodonium (4-methylphenyl)[4-(2-methylpropyl)phenyl]hexafluorophosphate (242 nm), 2,2'-bithiophen-5-yl 4-N,N'-diethylaminophenyl ketone (THBP), 6,6'-(((1E,1'E)-(2,5-bis(octyloxy)-1,4-phenylene)bis(ethene-2,1-diyl))bis(4,1-phenylene))bis(1,3,5-triamine-2,4-diamine)) (400 nm). As well as the stated initiators it is possible to use other known initiators from the following classes: alpha-amino ketones, metallocenes, iodonium salts, alpha-hydroxy ketones, or phosphines. Thermal stability exists preferably up to at least 50°C.

Depending on the energy of the radicals formed on initiator scission, they may be limited to initiating the acrylate polymerization or may additionally produce crosslinking reactions as well, such as, for example, 2-(4-methoxyphenyl)-4,6-bis(trichloromethyl)-1,3,5-triazine (MTT). Crosslinking of the chain is unwanted during the polymerization or syrup preparation, in order to keep the viscosities low for the coating. In the second polymerization step in the case of UV polymerization, crosslinking, photoactive crosslinkers may be added. They may also be polymerized electively into the chains. When using 2-oxo-1,2-diphenylethyl acrylate (benzoin acrylate) or analogues thereof, polymerization in a UV tunnel at a wavelength between 300 and 400 nm produces polymers which, after the end of the polymerization in the UV tunnel, can be crosslinked briefly and intensely with UV radiation at 250 nm by activation of the benzoin acrylate units incorporated by polymerization. These crosslinkers may equally be incorporated by polymerization during a thermally initiated solution polymerization, and activated later, after drying, with UV radiation. Essential is the crosslinking without the use of protic functional groups, in order to prepare pressure sensitive adhesive electrolytes of the invention, to ensure the electrochemical and chemical stability relative to the active materials used in the cell.

Benzophenone methacrylate (Visiomer 6976, 300 nm) and analogues thereof can also be used, with their known benefits and disadvantages. These initiators reduce the contamination with small molecules, but require a greater time for reaction because of the biomolecular reaction. Crosslinking must take place under inert conditions.

It is also possible to use mixtures of initiators or different initiators for different polymerization steps, e.g. preparation of the syrup and final curing.

Preferred are initiators with low effect on colouring of the PSAE, especially when used for electrochromic applications. Particularly, 2,2-dimethoxy-2-phenylacetophenone (Irgacure 651) and 1-hydroxy-cyclohexyl-phenyl-ketone (Irgacure 184) are preferred.

### Ionic liquids

The composition for polymerization as well as the PSAE comprises at least one ionic liquid. The ionic liquid not only improves the wettability or tackiness of the surface of the electrolyte film and prevents shrinking of the electrolyte film, but also improves the ion conductivity and facilities adhesive debonding on demand. "Ionic liquid" means a salt which is liquid at the temperature at which it is used. Typical ionic liquids have an organic cation and an organic anion. It can also be a mixture of ionic liquids.

Preferred organic cations include imidazoliums, especially 1,3-substituted imidazoliums, wherein the substituents in 1,3-positions are selected from a group R, which on each occurrence, identically or different, is H, an straight-chain alkyl group having 1 to 40 carbon atoms or an alkenyl or alkynyl group having 2 to 40 carbon atoms or a branched or cyclic alkyl group having 3 to 40 carbon atoms, where in each case one or more non-adjacent CH₂ groups may be replaced by R'C=CR', C=C, C=O, SO, SO₂, NR', O, S, COOR', or CONR', and where one or more H atoms may be replaced by D, F, Cl, Br or I, wherein R' stands on each occurrence, identically or differently, for H, D, F, Cl, Br, I, CN, OH, NH₂, a straight-chain alkyl, alkoxy or thioalkyl group having 1 to 20 C atoms or branched or cyclic alkyl group having 3 to 20 C atoms, where in each case one or more non-adjacent CH₂ groups may be replaced by SO₂, O, NH, S and where one or more H atoms may be replaced by D, OH, F, Cl, Br or I, and the groups R and R' or R' and R' may form a ring and not more than one R is H.

Examples for straight-chain, branched or cyclic alkyl groups are methyl, ethyl, n-propyl, i-propyl, n-butyl, i-butyl, s-butyl, t-butyl, 2-methylbutyl, n-pentyl, s-pentyl, cyclopentyl, neopentyl, n-hexyl, cyclohexyl, neohexyl, n-heptyl, cycloheptyl, n-octyl, cyclooctyl, 2-ethylhexyl, 2-methoxyethyl.

Examples for alkenyl groups are ethenyl (vinyl), propenyl (allyl), butenyl, pentenyl, cyclopentenyl, hexenyl, cyclohexenyl, heptenyl, (meth)acryl, preferably propenyl (allyl).

Preferred groups for R are methyl, ethyl, n-propyl, i-propyl, n-butyl, i-butyl, s-butyl, t-butyl, 2-methoxyethyl, 2-methylbutyl, n-pentyl, s-pentyl, cyclopentyl, neopentyl, n-hexyl, cyclohexyl. From alkyl groups straight-chain alkyl groups like methyl, ethyl, n-propyl, n-butyl, n-pentyl, n-hexyl are preferred.

Further preferred for organic cations are ammoniums, especially ammoniums with the formula NR₄⁺, wherein R is defined as above.

Further preferred for organic cations are pyridiniums, especially pyridiniums, wherein the substituent on the nitrogen is a group R as defined above.

Further preferred for organic cations are pyrrolidiniums, especially pyrrolidiniums, wherein the substituents on the nitrogen are each a group R as defined above.

Further preferred for organic cations are pyrrolidiniums, especially piperidiniums, wherein the substituents on the nitrogen are each a group R as defined above.

Further preferred for ionic liquids are sulfoniums, especially for the formula SR₃⁺, wherein R is defined as above.

Examples for preferred organic cations are 1,3-dialkylimidazoliums, such as 1-ethyl-3-methylimidazolium (EMIM), 1-methyl-3-propylimidazolium (PMIM), 1-butyl-3-methylimidazolium (BMIM), 1-hexyl-3-methylimidazolium, 1-octyl-3-methylimidazolium, 1-allyl-3-methylimidazolim (AllylMIM), 1-ethyl-3-vinylimidazolium (EVIM), 1,3-dimethylimidazolium (DiMIM) 1,3-diethylimidazolium (DiEIM), 1-(2-methoxyethyl)-3-methylimidazolium (MeOEMIM), 1-ethylimidazolium (EIM), 1-ethyl-2,3-dimethylimidazolium (EDiMIM); ammoniums, such as N-butyl-N,N,N,-trimethylammonium, N,N,N,N,-tetrabutylammonium, hexyl-trimethyl ammonium, N-(2-hydroxyethyl)-N,N,N,-trimethylammonium, N-(2-methoxyethyl)-N,N,N,-triethylammonium,, N,N-diethyl-N-methyl-N-heptylammonium, and N,N-diethyl-N-methyl-N-(6-hydroxyhexyl)ammonium; pyridiniums, such as N-methylpyridinium, N-ethylpyridinium, N-butylpyridinium, N-pentylpyridinium, N-hexylpyridinium (HexPy), 1-Butyl-4-methylpyridinium and 1-propyl-4-methylpyridinium (Pro4Pic), 1-ethyl-4-methylpyridinium (Et4Pic), 2-methyl-1-propylpyridinium (Pro2Pic); pyrrolidinium, such as N,N-dimethylpyrrolidinium, N-methyl-N-ethylpyrrolidinium, N-methyl-N-propylpyrrolidinium (Pyr₁₃) and N-methyl-N-butylpyrrolidinium (Pyr₁₄); piperidiniums, such as methyl-propyl-piperidinium, buthyl; and phosphoniums, such as tetrabutylphosphonium, triethyloctylphosphonium, tributyloctylphosphonium, and trihexyltetradecylphosphonium; sulfoniums, such as diethylmethylsulfonium (S122), trietehylsulfonium (S222) . In particular, an imidazolium having an alkyl group in the side chain, such as 1,3-dialkylimidazolium, is preferably used.

In dialkylimidazolium having an alkyl group in the side chain, shortening the alkyl group improve the conductivity for the lithium ions. Thus, 1-ethyl-3-methylimidazolium (abbreviated as EMIM) is particularly preferably used.

The anion of the salt can be selected from the group comprising Cl⁻, Br. I⁻, BF₄⁻, ⁻OAc, CN⁻, SCN⁻, CF₃SO₃⁻ (OTf, Triflate), [CF₃SO₂)₂N]⁻ (TFSI or BTA, bis(trifluoromethylsulfonyl) imide), [(FSO₂)₂N]⁻ (FSI, bis(fluorosulfonyl) imide), C(CN)₃⁻ (tricyanomethanide, TCM), CH₃CH₂OSO₃⁻ (EtSO₄, ethylsulfate), CH₃OSO₃⁻ (OMs, methylsulfate), tosylate (⁻OTs) and N(CN)₂⁻ (DCA, dicyanamide).

A preferred ionic liquid is selected from the group comprising 1-ethyl-3-methylimidazolium bis(fluorosulfonyl) imide (designated as EMIM FSI), 1-ethyl-3-methylimidazolium bis(trifluoromethanesulfonyl) imide (designated as EMIM TFSI), 1-butyl-3-methylimidazolium bis(trifluoromethylsulfonyl) imide (designated as BMIM TFSI), 1-ethyl-3-methylimidazolium thiocyanate (designated as EMIM SCN), 1-ethyl-3-methylimidazolium dicyanamide (designated as EMIM DCA), 1-ethyl-3-methylimidazolium tetrafluoroborate (EMIM BF₄), 1-butyl-3-methylimidazolium tetrafluoroborate (BMIM BF₄), 1-allyl-3-methylimidazolium dicyanamide (AllylMIM DCA), 1-allyl-3-methylimidazolium bis(trifluoromethylsulfonyl) imide (AllylMIM TFSI), 1-ethyl-3-vinylimidazolium bis(trifluoromethylsulfonyl) imide (EVIM TFSI), N-methyl-N-propylpyrrolidinium bis(trifluoromethanesulfonyl) imide (Pyr₁₃ TFSI), and N-methyl-N-propylpyrrolidinium bis(fluorosulfonyl) imide (Pyr₁₃ FSI), N-butyl-N-methylpyrrolidinium bis(fluorosulfonyl) imide (Pyr₁₄ FSI), 1-butyl-3-methylpyrrolidinium bis(trifluoromethylsulfonyl) imide (Pyr₁₄ TFSI), 1-butyl-1-methylpyrrolidinium dicyanamide (Pyr₁₄ DCA), 1-butyl-1-methylpyrrolidinium triflate (Pyr₁₄ OTf), 1-Ethyl-3-methylimidazolium triflate (EMIM OTf), 1-butyl-3-methylimidazolium triflate (BMIM OTf), 1,3-dimethylimidazolium bis(trifluoromethylsulfonyl) imide (DiMIM BTA), 1-butyl-3-methylimidazolium tricyanomethanide (BMIM TCM), 1-butyl-3-methylimidazolium methyl sulfate (BMIM MeSO₄), 1,3-diethylimidazolium bis(trifluoromethylsulfonyl) imide (DiEIM TFSI), N-butyl-N-methylpyrrolidinium tricyanomethanide (Pyr₁₄ TCM), diethylmethylsulfonium bis(trifluoromethylsulfonyl) imide (S122 TFSI), 1-propyl-4-methylpyridinium bis(trifluoromethylsulfonyl)imide (Pro4Pic TFSI), 1-Ethyl-3-methylimidazolium ethyl sulfate (EMIM EtSO₄), triethylsulfonium bis(trifluoromethylsulfonyl) imide (S222 TFSI), 1-(2-methoxyethyl)-3-methylimidazolium bis(trifluoromethylsulfonyl) imide (MeOEMIM TFSI), 1-methyl-3-propylimidazolium bis(trifluoromethylsulfonyl) imide (PMIM TFSI), 1-butyl-1-methylpyrrolidinium bis(trifluoromethylsulfonyl) imide (Pyr₁₄ TFSI), 1-butyl-4-methylpyridinium bis(trifluoromethylsulfonyl) imide, 1,3-Dimethylimidazolium methyl sulfate (DiMIM MeSO₄), 1-ethylimidazolium bis(trifluoromethylsulfonyl) imide (EIM TFSI), 1-ethyl-3-methylimidazolium methanesulfonate (EMIM OMs), 1-ethyl-4-methylpyridinium bis(trifluoromethylsulfonyl) imide (Et4Pic TFSI), 1-ethyl-2,3-dimethylimidazolium bis(trifluoromethylsulfonyl) imide (EDiMIM TFSI), 2-methyl-1-propylpyridinium bis(trifluoromethylsulfonyl) imide (Pro2Pic TFSI), 1-Ethyl-3-methylimidazolium acetate (EMIM OAc), 1-Hexylpyridinium bis(trifluoromethylsulfonyl)imide (HexPy TFSI).

The ionic liquid is preferably a colourless to slightly yellowish liquid depending upon purity or chemical structure.

In a preferred embodiment the anion of the ionic liquid is different than the anion of the conducting salt used. This prevents the formation of an equilibrium between these salts.

### Further additives such as plasticizers and additional monomers:

The pressure sensitive adhesive electrolyte may comprise further additives such as plasticizers, preferably in a fraction of 0 to 50 wt %, more preferably in a fraction of 0 to 40 wt %, such as, more particularly, 0 to 30 wt %. Plasticizers used may be, for example, cyclic carbonates such as ethylene carbonate (EC), vinylene carbonate (VC), propylene carbonate (PC), butylene carbonate (BC) or fluoroethylene carbonate (FEC), linear carbonates such as dimethyl carbonate (DMC), diethyl carbonate (DEC) or ethyl methyl carbonate (EMC), mixed carbonates, dimethylacetamide, ethyl methanesulfonate (EMS), gamma-butyrolactone, dimethyl sulfoxide, polyethylene oxide (PEO, also polyethylene glycol), PEG), "glymes" such as diglyme, triglyme, tetraglyme, ethylene glycol diacetate, ketones, or various ethers or polyethers, or mixtures thereof. Particular preference in the invention is given to the use as plasticizer based on polyethylene oxides or glymes, preferably polyethylene oxides.

The polyethylene oxides preferably have hydroxyl, (meth)acrylate, methoxy or ethoxy groups as chain ends, wherein in case of (meth)acrylate polyethylene oxides with only one (meth)acrylate chain end are preferred.

It is also possible to use mixtures of PEOs with and without (meth)acrylate chain ends.

The chain end or chain ends with no (meth)acrylate groups are preferably hydroxy groups. However, methoxy groups improve conductivity, and the hydroxy groups improve adhesion strength to the substrates.

PEOs with (meth)acrylate groups function as monomers and will be copolymerized with monomers (a1) and (a2). This introduces long PEO chains as side groups into the polymer.

In a preferred embodiment the chain length of the PEOs used is between 5 to 20 preferably 5 to 12 which corresponds to the number of consecutive ethylene oxide (-O-CH₂-CH₂-) repeat units in the polymer chain. An example for polymerizable PEOs is PEGMA480 and for unpolymerizable is PEG200.

In a preferred embodiment no plasticizer is selected from cyclic carbonates such as ethylene carbonate (EC), vinylene carbonate (VC), propylene carbonate (PC), butylene carbonate (BC) or fluoroethylene carbonate (FEC), linear carbonates such as dimethyl carbonate (DMC), diethyl carbonate (DEC) or ethyl methyl carbonate (EMC), mixed carbonates, dimethylacetamide, ethyl methanesulfonate (EMS), gamma-butyrolactone, dimethyl sulfoxide. Especially EC or DEC are flammable (low flash point), volatile and also sensitive to moisture. This makes the composition more dangerous and harder to process. These ingredients are also smelly.

All of the stated plasticizers may typically improve the solubility during the polymerization and, at the same time, act as an integral constituent of the final electrolyte. Besides, plasticizers make the electrolytes soft which facilitates better ion conductivity however compromises adhesion properties.

The composition may comprise further ingredients like heteroaromatic substances like triazine. Such substances may help to improve the conductivity of the electrolyte. Such substances may be present in an amount of 0 to 20 wt % (of the total composition but as part of the further ingredients). Also in some cases further (meth)arcylate monomers especially with 4-hydroxybutyl acrylates (4-HBA), 2-isocyanatoethyl acrylate, 2-cyanoethyl acrylate (2-CEA), N-(2-hydroxyethyl) acrylamide, tetrahydrofurfuryl acrylate can be added in similar amounts to improve adhesion strength.

In a preferred embodiment the plasticizer as well as the further ingredients are added in step b) of the production process as described below.

### Crosslinkers:

As well as the grafting initiators, the polymer matrix may also be crosslinked with crosslinking polyfunctional acrylates, these being molecules possessing more than one acrylate group. Suitable examples include hexanediol diacrylate (HDDA), ethoxylated trimethylolpropane triacrylate (ETPTA), 1,9-nonanediol dimethacrylate, 1,6-hexanediol dimethacrylate, di(trimethylolpropane) tetraacrylate, di(ethylene glycol) diacrylate (Di(EG)DA), bis(2-methacryloxyethyl) phosphate, di(ethylene glycol) trimethacrylate (Di(EG)DM), bisphenol A bis(2-hydroxypropyl)acrylate, ethylene glycol dimethacrylate (EGDM), dipropylene glycol diacrylate, trans-1,4-cyclohexanediol dimethacrylate, (Di(PG)DA), 1,3-glyceryl dimethacrylate, 1,10-decanediol dimethacrylate, dipropylene glycol dimethacrylate (Di(PG)DM), 1,4-diacryloylpiperazine, ethylene glycol divinyl ether (EGDVE), diethylene glycol diacrylate, diethylene glycol divinyl ether (Di(EG)DVE), diethylene glycol dimethacrylate, triethylene glycol dimethacrylate (tri(EG)DM), ethylene glycol diacrylate, dipentaerythritol pentaacrylate (DPentA), trimethylolpropane triacrylate (TMPTA), propoxylated trimethylolpropane triacrylate (PO3-TMPTA), propoxylated trimethylolpropane triacrylate (PO6-TMPTA), polyethylene glycol) diacrylate (PEDGA) and polyethylene glycol trimethacrylate.

Provided all of the functional groups are reacted in the end product, protic groups can also be used for the crosslinking. In that case the following crosslinkers and crosslinking systems are also suitable: isocyanate crosslinkers, epoxy-based crosslinkers, melamine-based crosslinkers, peroxide-based crosslinkers, metal chelate-based crosslinkers, metal salt-based crosslinkers, carbodiimide-based crosslinkers, oxazoline-based crosslinkers, aziridine-based crosslinkers, amine-based crosslinkers or silane-based crosslinkers. Combination of different crosslinkers is likewise possible.

Where difunctional crosslinkers are used, the fraction thereof in the pressure sensitive adhesive is typically between 0.2 and 10 wt %, more preferably between 0.5 and 3 wt %, of crosslinker per 100 wt % of the polymer component. Where trifunctional crosslinkers are used, the fraction thereof added is preferably 0.02 to 5 wt % per 100 wt % of the polymer component, more preferably 0.05 to 1 wt %. It is also possible, however, to use crosslinkers with higher functionality. Furthermore, a plurality of crosslinkers may be used, which in terms of their functionality may be the same or different (for example, a combination of difunctional and trifunctional crosslinkers). The amounts used ought then to be adapted advantageously.

In a preferred embodiment the mixture contains no crosslinker or crosslinking initiator. The resulting electrolyte is not crosslinked.

### Solvents:

As described above, in accordance with the present specification, the only valid solvents (compounds) are solvents which at atmospheric pressure, i.e. 1013 mbar, have a boiling point of less than 100°C. Solvents having a boiling point at 1013 mbar of 100°C or more, and solvents which have no boiling point at 1013 mbar, instead decomposing at 100°C or more, are considered by contrast to be plasticizers for the purposes of the present specification.

Solvents used for polymerizing the polymer matrix of the electrolyte or as assistants for the blending of the polymer matrix with further components and additives may be, for example dry ethyl acetate. The electrochemical stability towards oxidation lies between that of diethyl carbonate (DEC) and the more stable cyclic ethylene carbonate (EC), and it can be dried very quickly and with little expenditure of energy. The presence of ethyl acetate additionally improves the low-temperature properties in respect of ion conduction. Other solvents as well, however, can be used, such as acetonitrile, 1,3-dioxolane, dimethoxyethane, ketone or ethylene glycol dimethyl ether, for example. All of the stated solvents may also simultaneously be solvents in the polymerization and an integral constituent of the final electrolyte.

It is often desirable, however, for reasons of safety (odour, flammability, processability), not to have any volatile solvents in the electrolyte, particularly if the electrochemical system is situated between two film substrates as in the case of electrochromic systems, rather than being encapsulated, as is usual with batteries, in aluminium housings or other housings of significant stability. In this case the solvent can be removed from the electrolyte of the invention after the coating of the electrolyte, by drying in a drying tunnel. An alternative possibility is to use a solvent-free polymerization process such as UV syrup polymerization, for example, to produce the polymer matrix. It is preferred to use solvent-free polymerization in the production of the PSAE.

If the polymer matrix has been produced by polymerization in a solvent, there are known methods for drying or concentrating the polymer-solvent mixture where appropriate, such as concentration in an extruder, for example. In this way the effect on side-reactions through residual solvent after the concentration or drying is limited.

The composition of the invention is preferably free of solvents.

### Polymers:

The aim of the invention is to provide a pressure sensitive adhesive electrolyte, i.e. a pressure sensitive adhesive, which through ion conduction has a very good electrolyte function. Pressure sensitive adhesives (PSAs) are in particular, as described above, polymeric compositions which - where appropriate through suitable additization with further components, such as tackifier resins, for example - are durably sticky and permanently adhesive at the application temperature (at room temperature unless otherwise defined) and adhere to a multiplicity of surfaces on contact, more particularly adhering instantaneously (referred to as having "tack", i.e. stickiness or touch-stickiness). They are capable, even at the application temperature without any activation by solvent or by heat, though customarily under the influence of a greater or lesser pressure, of wetting a substrate where bonding is to take place, and doing so sufficiently to allow interactions sufficient for adhesion to develop between the adhesive and the substrate. Influencing parameters essential for this purpose include the pressure and also the contact time. The particular properties of the pressure sensitive adhesives derive among other properties from their viscoelastic properties in particular.

Pressure sensitive adhesives comprise one or more polymers (for the purposes of this text, the polymers are referred to collectively as the "polymer component" of the PSA), which may be homopolymers and/or copolymers of different monomers polymerizable with one another. The polymer components may already per se have pressure sensitive adhesive properties, or may acquire such properties only after suitable additization, by resins, for example.

The polymer component may in principle be prepared on the basis of polymers differing in chemical nature. The pressure sensitive adhesive properties may be influenced by factors including the nature and proportion of the monomers used when polymerizing the PSA's parent polymers, the average molar mass and molar-mass distribution thereof, and the nature and amount of the additives to the PSA, such as tackifier resins, plasticizers and the like. During polymer preparation, moreover, crosslinkers may be used, typically with a fraction of 0.05 to 5 wt %, preferably 0.1 to 3 wt %. Sometimes a chain-transferring agent like dodecyl mercaptan may also be employed to regulate the polymer molecular weight.

In order to attain the viscoelastic properties, the monomers on which the PSA's parent polymers are based, and also any further components present in the PSA, may be selected more particularly such that the PSA has a glass transition temperature (according to DIN 53765) below the temperature of use (that is, usually below room temperature).

Through suitable cohesion-boosting measures, such as crosslinking reactions (formation of bridge-forming links between the macromolecules), for example, it is possible to expand and/or shift the temperature range within which a polymer composition exhibits pressure sensitive adhesive properties. The range of application of the PSAs may therefore be optimized by an adjustment between flow ability and cohesion of the composition.

In accordance with the invention the pressure sensitive adhesive polyelectrolyte comprises at least one polyacrylate, i.e. poly(meth)acrylate. A "poly(meth)acrylate" is a polymer obtainable by polymerizing acrylic and/or methacrylic monomers and also, optionally, further, copolymerizable monomers. In the invention the poly(meth)acrylate is typically prepared by polymerizing acrylate monomer (a1) from the group of the (meth)acrylic esters having 4 - 44 carbon atoms and containing at least one oxygen atom, acrylate monomer (a2) from the group of the (meth)acrylic esters or amides having 4 - 25 carbon atoms and containing at least one nitrogen atom, and optionally further monomer. The term "(meth)acrylic esters" embraces not only methacrylic esters but also acrylic esters. The poly(meth)acrylate is polymerized in particular by free radical polymerization of the comonomers used, according to polymerization processes which are known per se.

High molecular weight polyethylene oxide (PEO) which forms complexes with Li salts is one of the best polymer matrices (although the oxidative electrochemical stability is limited to 3.8 V versus Li/Li⁺, allowing a battery to operate at a maximum of up to 3 V). However, polymers based on polyvinyl chloride (PVC) and acrylates are also very suitable. Poly(vinylidene fluoride/trifluoroethylenes) or poly(vinylidene fluoride/hexafluoropropylene) in a blend with polyethylene oxide or polyethylene oxide/polyacrylonitrile (PEO/PAN) blends are likewise suitable. Acrylates with ethylene oxide (EO) units in the side chains have a higher electrochemical stability and can be operated up to 4 V (e.g. LFP cell). Additionally suitable are copolymers of vinyl chloride, acrylonitrile, methyl methacrylate, ethylene oxide, propylene oxide, epichlorohydrin, vinylidene chloride, vinylidene fluoride, ethylene succinate and hexafluoropropylene. Copolymers of vinylidene fluoride and hexafluoropropylene are frequently also used as binders for the active materials.

For pressure sensitive adhesive electrolytes of the invention, polymers based on acrylates are especially suitable, as they have high transparency, excellent adhesion to different surfaces, easy to select monomers of different functional groups for versatile applications, better Li salts solubility and weathering resistance to be achieved.

In another preferred embodiment the PSAE of the invention may be used in electrically debondable or delamination PSA application. By applying a high voltage beyond the electrochemical stability, e.g. above 5 V, the PSAE be degraded and the adhesion is reduced. This is an important function of the invented PSAE to selectively, or with control decrease the adhesion strength when needed.

The composition of the PSAE may be optimized depending on the use of the PSAE. In case of electrical debonding or delamination a lower conductivity may be sufficient, e.g. a lower content of ionic liquid and/or conducting salt. In a preferred embodiment the conductivity for electrical debonding or delamination is 10⁻⁶ S/cm or more, while for electrochromic applications a conductivity of 10⁻⁵ S/cm or more is preferred.

The invention also refers to a method for selective delamination or debond by applying a voltage beyond the electrochemical stability of the PSAE to the PSAE and thereby decrease the adhesion strength.

The polymers of the polymer component are based typically to an extent of at least 15 wt %, such as 15 to 99 wt %, for example, on one or more (meth)acrylate monomers. The acrylate monomers used are typically as defined in Claim 1. In accordance with the invention, the polymer component used may, alternatively or additionally to the poly(meth)acrylate, comprise other relatively polar polymers, such as, for example, specially modified polyesters, polyurethanes or polyurethane acrylates.

The hydrocarbon part of the alcohol component of the acrylate monomer used preferably in the invention may be branched or unbranched or cyclic, saturated or unsaturated, aliphatic or aromatic, substituted or unsubstituted, preferably branched or unbranched or cyclic, saturated or unsaturated, aliphatic, since aromatic groups may cause colour.

The pressure sensitive adhesive electrolyte described in accordance with the invention in this text is outstandingly suitable, moreover, for use as optically clear adhesive bond in display units of electronic devices (displays) or electrochromic cells, particularly as a pressure sensitive adhesive electrolyte in adhesive tapes, especially as a pressure sensitive adhesive electrolyte in double-sided adhesive tapes. In that case the double-sided adhesive tape may be provided with an optically transparent carrier or may be a carrier-less double-sided adhesive tape. Particular preference is given to use no carrier, since in that case an ion exchange in the electrolyte is readily possible. If an optically transparent carrier is used, it must be transparent for the ions. They are therefore also suitable for electrochromic applications for windows of all kinds. Such carriers also include transparent papers made from modified cellulose fibres.

A particular advantage is a high transmission value of the pressure sensitive adhesive electrolyte at 550 nm. This provides for the necessary light transparency in this range. The CIE Lab colour space is a colour space which covers the range of perceptible colours (see DIN EN ISO 11664-4). It has been found that in particular the b* value correlates with the perceptible degree of yellowing. b* values of more than 1 are perceived as yellow colouration. In accordance with the invention, therefore b* is optionally in the range of -1 < b* <1. However, the range of values of -6 < b* < 6 is also still considered good in the invention for applications where optical clarity is not that important. The term "haze" is used according to ASTM D1003-00 to describe the scattering of light by a body, reported as the percentage fraction of the light that is diverted more than at a predetermined angle. A haze less than 5% is preferred, more preferably a haze < 2% such as for example, < 1%, in order not to interfere with viewing through an electrolyte layer of the invention. Surprisingly it has been found that such clarities are realizable with the pressure sensitive adhesive electrolyte layers of the invention in spite of high levels of conducting salt and/or ionic liquid.

Depending on the application of the PSAE of the invention the PSAE may be slightly translucent, which may be suitable for other applications besides electrochromic cells.

### Conducting salts:

Common conducting salts such as lithium salts, usually used at a concentration of 1 mol/L, can also be used in pressure sensitive adhesive electrolytes of the invention. LiClO₄ is also soluble at high concentrations in numerous solvents and polymers. It possesses a large anion and a high dissociation constant, e.g. 0.75 mol/L of LiClO₄ can be dissolved in 10 wt % of plasticized PMMA. In terms of its moisture resistance, particular advantage is possessed by lithium bis(trifluoromethylsulfonyl)imide (LiTFSI), lithium bis(fluorosulfonyl)imide (LiFSI) or Lithiumtriflate (LiOTf). However, it is also possible to use other cations, such as Na⁺, K⁺, Cs⁺, Rb⁺, Ag⁺, Cu⁺, Cu²⁺, Mg²⁺, NH₄⁺ and other anions, such as Cl⁻, Br, I⁻, ClO₄⁻, OH⁻, SCN⁻, AsF₆⁻, CF₃SO₃⁻, CH₃CO₂⁻, bis(oxalato) borate (BOB), PF₆⁻, BF₄⁻, [PF₃(CF₂CF₃)₃]⁻ (FAP), trifluoromethylbenzimidazole anion, difluorooxalatoborate (FOB) and C(CF₃SO₂)₃⁻ in pure form or in a mixture. Anions like PF₆⁻ are not preferred since they form toxic and corrosive gas like HF upon reacting with moisture.

The conducting salt can also be a mixture of conducting salts.

The conducting salt is present with 0 - 35 wt %, preferably 0 - 30 wt %, more particularly 0 - 25 wt %.

In case that a conducting salt is used a preferred range is 2 - 35 wt %, preferably 3 - 30 wt %, more particularly 5 - 25 wt %.

In case that the conducting salt is used in an amount of 0 to 0.1 wt %, preferably 0 wt %, it may be necessary to increase the amount of ionic liquid in the composition. Preferably in case of an amount of conducting salt of 0 to 0.1 wt % the amount of ionic liquid is 2 - 60 wt %, preferably 10 to 60 wt %, more preferably 20 to 60 wt %, even more preferably 25 to 60 wt %.

In a preferred embodiment of the invention the combined amount of conducting salt and ionic liquid is 10 wt % to 70 wt %, preferably 10 wt % to 60 wt %.

### Additives:

It may be advantageous to add nanoparticles in order to reduce the crystallization tendency of polymer electrolytes, especially of the polymer therein. Examples of suitable fillers, which in part increase the dielectric constant of the polymer composite, such as barium titanate, for example, are CeO₂, Er₂O₃, ZnO or TiO₂. They improve the ionic dissociation of the conducting salt and provide diffusion channels for the ions. Further additives may likewise be added, for the purpose of stabilizing the cycling stability, for example, such as cyclohexylbenzene, tert-amylbenzene, adiponitrile, 2-propynyl methanesulfonate, 1,3-propane sulfone or vinylene carbonate.

In order to prevent yellowing of the conductive coatings such as indium tin oxide or of the other active materials, for example, the electrolyte may be provided with UV protection additives which as well as in the UV-A and UV-B ranges absorb in particular in the UV-C range. Suitable examples for this purpose include 2-(2H-benzotriazol-2-yl) derivates. Ethanediamide derivates and piperidine derivates, however, may also be used. In an exceptionally preferred procedure, moreover, the acrylate adhesive of the PSA layer is admixed with at least one [3,5-bis(1,1-dimethylethyl-4-hydroxyphenyl)methyl]alkylmalonate derivate. Fractions of between 0.2 and 4.0 wt % of absorber have proven to be advantageous, with very thin layers in the region of less than 30 µm preferably having higher fractions of absorber, between 2 - 4 wt %, where thick electrolyte layers with a thickness of around 200 µm manage with 0.3 wt % of absorber.

In order to optimize the technical adhesive properties, it is furthermore possible to admix the pressure sensitive adhesive electrolytes of the invention, i.e. PSAs, with resins. Resins are considered for the purposes of this invention typically to be small molecule to oligomeric and polymeric compounds having number-average molecular weights Mₙ of not more than 10 000 g/mol; they are not included in the polymer component. Tackifying resins for addition (peel adhesion-enhancing resins, i.e. tackifier resins) that can be used include which exception all existing tackifier resins and those described in the literature. Representatives include the pinene resins, indene resins and rosins, their disproportioniated, hydrogenated, polymerized and esterified derivatives and salts, the aliphatic and aromatic hydrocarbon resins, terpene resins and terpene-phenolic resins, and also C₅ to C₉ and other hydrocarbon resins. Any desired combinations of these and further resins may be used in order to adjust the properties of the resultant adhesive in line with requirements. Generally speaking, it is possible to use any resins or rosins which are compatible with (soluble in) the corresponding base polymer; reference may be made more particularly to all aliphatic, aromatic and alkylaromatic hydrocarbon resins, hydrocarbon resins based on pure monomers, hydrogenated hydrocarbon resins, functional hydrocarbon resins, and natural resins or hydrogenated rosins like methyl ester of hydrogenated rosin.

With the acrylate-based, pressure sensitive adhesive electrolyte used typically in the invention, there is no need for the presence of tackifier resins, and so one outstanding variant constitutes the pressure sensitive adhesive electrolyte of the invention wherein no resins have been added to the PSA. Such additions frequently possess adverse effects in the context of application for optical bonds. The resins used in the prior art as tackifier resins for acrylate PSAs are usually polar in nature, in order to achieve compatibility with the polyacrylate matrix. This usually leads to the use of aromatic tackifier resins, which on prolonged storage or on light exposure are subject to a yellowish discolouration.

Depending on the application, e.g. if no optical clarity is needed, tackifier resins may be used, preferably in a low range, preferably 0 to 1 wt %, more preferably 0.1 to 0.5 wt %.

### Product design:

The pressure sensitive adhesive tape of the invention may preferably be a double-sided adhesive pressure sensitive adhesive electrolyte. The pressure sensitive adhesive electrolyte may have one or more optically transparent carrier layers, with at least one of the outer layers of adhesive, preferably two outer layers of adhesive in the case of double-sided adhesive, carrier-containing adhesive tapes, being based on the above-described polymer component and in particular being identical. In the case of a double-sided adhesive tape, the middle carrier layer has at least as good an ionic conduction as the surrounding layers of the pressure sensitive adhesive electrolyte.

Especially advantageous are double-sided adhesive, carrier-less adhesive tapes, especially those adhesive tapes which are formed exclusively of the layer, as described in accordance with the invention, of an ion-conductive acrylate PSA.

One possible embodiment of the pressure sensitive adhesive tape may also be provided as a single-sided adhesive tape, with the electrolyte of the invention in the case of this embodiment being already bonded on a half-cell or on a conductive substrate (e.g., aluminium-polymer film) and taking the form of a roll material. In this case the layer construction comprises either the components of foil carrier - conducting coating - cathode material - electrolyte - liner (optional) or the components of film carrier - conductive coating - anode material - electrolyte - liner (optional), in the order stated. Through the provision of a half-cell as an intermediate product, the manufacture of the cells can be delocalized, particularly since the intermediate product is stable over a long transport distance.

The additized polyacrylate obtainable as set out above is made into a layer of PSA by application to one or both sides of an optically transparent carrier, in which case it is possible to use a permanent carrier, which is retained in the adhesive tape construction in the application as well. Particularly advantageous, however, are carrier-less adhesive tapes, especially single-layer adhesive tapes, which in one very advantageous embodiment consist in the application of the PSA layer on its own (known as adhesive transfer tapes) and which, for handling, converting and commercial offering beforehand, are provided on one or both sides with a temporary carrier, being wound in particular into a roll.

In order to produce such adhesive as transfer tapes, the pressure sensitive adhesive electrolyte obtainable as set out above is advantageously coated in the desired layer thickness onto a temporary carrier (made in particular from anti-adhesive and/or anti-adhesively furnished materials, known as liner materials, release materials or (release) liners, such as siliconized papers, polymer films, may also be coated with electrically conductive materials or the like, for example). In principle it is possible here to use all release materials that are suitable for polyacrylate PSAs. Particularly preferred for use are release liners with a PET carrier core.

It is also possible to use two clear release liners for such tape, wherein both release liner differ in their release, one liner has a tight and the other an easy release.

For electrical debonding application one backing or releaser liner may be conductive as for example by using an aluminium coated polymer film.

It is also possible to produce adhesive tapes having two layers of (pressure sensitive) adhesive of different kinds, with at least one of the layers being a PSA layer (of the invention) as described within this specification. The PSA layers may be directly adjacent (two-layer adhesive tape), or optionally there may also be one or more further layers between the two PSA layers, such as carrier layers or the like, for example (multi-layer construction).

### Methods for producing the pressure sensitive adhesive electrolytes:

Suitable in principle as possible methods for producing PSAEs of the invention are, in particular, solution polymerization and solution coating, UV polymerization and extrusion.

In the case of solution polymerization, the polymer is produced in a solvent and additives are either already added before or during the polymerization or else are added to the polymer solution after the polymerization. Thereafter the polymer solution is coated onto a web of release paper, and the solvent is removed wholly or partly by drying.

UV polymerization has proven to be particularly advantageous. It emerged in the course of the extensive investigations that as well as other monomers, in the case of UV polymerization in bulk, this effect has no adverse consequences for the optical appearance of the electrolyte web.

2-(2-Ethoxyethoxy)ethyl acrylate (EEEA also called EDGA) and DMAA are therefore used with preference in producing the pressure sensitive adhesive electrolyte of the invention.

Surprisingly it has been found that the conducting salt is already soluble in monomer (a1), while the presence of monomer (a2) increases the adhesion of the resulting PSAE.

In a preferred embodiment the final UV polymerization is performed using a dosage high enough to ensure a high conversion (e.g. polymerization) of the monomers. If the amount of free monomers is low in the final electrolyte the long-term stability is increased, since no reactive groups are present in the electrolyte. Besides, unreacted monomers can be a health or environmental concern. These effects are also minor because the PSAE is put between two half cells in a sandwich configuration and encapsulated with glass if necessary or moisture barrier films or tape at the edges.

In a preferred embodiment the PSAE is prepared in a two-step process.

In a first step a UV syrup is prepared by polymerizing acrylate monomer (a1) and acrylate monomer (a2). This is achieved by adding at least one initiator, preferably in an amount of less than 0.5 wt %, preferably less than 0.1 wt %, more preferably less than 0.005 wt %. The weight ratio of monomer (a1) and monomer (a2) is preferably from 95:5 to 50:50, more preferably from 80:20 to 50:50, more preferably 75:25 to 55:45. This mixture is polymerized to achieve a viscous syrup, preferably with a conversion between 5 % to 40 %. From this syrup a liquid electrolyte is formulated by adding the other components of the electrolyte. Especially by adding further monomers in the second step the properties of the syrup can be tuned. The syrup is present with a weight ratio of 10 wt % to 90 wt %, preferably 15 wt % to 85 wt %, based on the liquid electrolyte. If two different initiators are used between these two steps their combined weight ratios are added up.

This liquid electrolyte is then cured in order to obtain the pressure sensitive adhesive electrolyte of the invention. It is possible to process the liquid electrolyte according to the dedicated use before the final curing, e.g. coating on substrates.

The final curing is preferably done to certain an extent that the resulting electrolyte contains as less unreacted monomers as possible. This is preferably achieved by using UV polymerization with a dose larger than 1000 mWs/cm², preferably between 2000 mWs/cm² to 6000 mWs/cm². By the high dose the long-term stability of the electrolyte is improved as well as the release of unreacted toxic monomer is suppressed.

It was also possible to polymerize the mixture to the PSAE in one curing step. In this case, multiple monomers from (a1) and (a2) were blended with conductive salt, ionic liquid, a photo initiator, and then UV cured.

The invention is illustrated below by a number of examples. The examples described below illustrate particularly advantageous versions of the invention, without wishing thereby to subject the invention to any unnecessary limitation.

### Examples:

Raw materials used in the examples were as follows:
   (a) Acrylate monomers:
      - 2-(2-Ethoxyethoxy)ethyl acrylate (EEEA or EDGA)
      - N,N-Dimethylacrylamide (DMAA)
      - Poly(ethylene glycol) methylether acrylate (PEGMA, PEGMA480) with ~ 10 EG units, from Sigma-Aldrich
   (b) Photoinitiators:
      - 2,2-Dimethoxy-2-phenylacetophenone (Irgacure 651) from Sigma-Aldrich
      - 1-Hydroxy-cyclohexyl-phenyl-ketone (Irgacure 184) from Sigma-Aldrich
   (c) Conducting salts:
      - Lithium bis(trifluoromethylsulfonyl)imide (LiTFSI) from Sigma-Aldrich
      - Lithium bis(fluorosulfonyl)imide (LiFSI) from Sigma-Aldrich
      - Lithium triflate (LiOTf, lithium triflouromethanesulfonate) from Sigma-Aldrich
   (d) Ionic liquids
      - 1-Ethyl-3-methylimidazolium bis(fluorosulfonyl)imide (EMIM FSI) from proinic
      - 1-Methyl-1-propylpyrrolidinium Bis(fluorosulfonyl)imide (Pyr₁₃ FSI) from TCI
      - 1-Ethyl-3-methylimidazolium bis(trifluoromethylsulfonyl)imide (EMIM TFSI) from proionic
      - 1-Ethyl-3-methylimidazolium thiocyanate (EMIM SCN) from Sigma-Aldrich
      - 1-Ethyl-3-methylimidazolium dicyanamide (EMIM DCA) from BASF/Carl Roth
      - 1-Ethyl-3-methylimidazolium triflate (EMIM OTf) from Sigma-Aldrich
      - 1-Ethyl-3-methylimidazolium tetrafluoroborate (EMIM BF₄) from Sigma-Aldrich
      - 1-Butyl-3-methylimidazoliumtetrafluoroborat (BMIM BF₄) from Sigma-Aldrich
   (e) Plasticizers:
      - Poly(ethylene glycol) (PEG200), hydroxyl chain end from Sigma-Aldrich
      - Poly(ethylene glycol) dimethylether (PEG250) from Sigma-Aldrich
   (f) Additives and additional monomers:
      - Triazole from Sigma-Aldrich
      - 4-Hydroxybutyl acrylate (4-HBA) from TCI
      - 2-lsocyanatoethyl acrylate from TCI
      - 2-Cyanoethyl acrylate (2-CEA) from TCI
      - N-(2-hydroxyethyl) acrylamide from TCI
      - Tetrahydrofurfuryl acrylate from TCI
      - Poly(ethylene glycol) methylether acrylate (PEGMA, PEGMA480) with ~ 10 EG units, from Sigma-Aldrich

Example 1 below shows the preparation of a pressure sensitive adhesive electrolyte of the invention by means of bulk polymerization. Disregarding solvents, the components used bring the total to 100 wt %.

### Example 1 - UV polymerization:

The electrolytes of the invention, polymerized preferably without solvent, were produced with the successive steps of a) prepolymer preparation, i.e. syrup preparation, b) formulation of the liquid electrolyte, i.e. incorporation of the prepolymer or syrup into the final mixture, and c) coating and curing the final mixture (liquid electrolyte), with curing relating to the polymerization. All quantity figures are based on the final formulation after process steps a) and b). See the details below:

### Example:

The individual steps in the preparation of the pressure sensitive adhesive electrolyte are described below:
Step a) Mixtures of different ratios of EDGA and DMAA (monomer (a1) and monomer (a2)) with different wt % ratios of 50:50, 60:40, 70:30 and 80:20 were prepared. Irgacure 651 photoinitiator with a wt % of 0.0063 was added to the mixture. The mixture was degassed with N₂ for 30 min and then irradiated by UV light in a stirred tank reactor at a wavelength of 365 nm with an intensity of 0.5 mW/cm². The initial temperature of the stirred tank reactor was 23°C. When the reaction temperature reached to 49 °C, the UV lamp was switched off. The UV syrup was let it cool down and kept way from light. The syrup obtained had a viscosity in the range of 4400 cP to 6500 cP with a refractive index in the rage of 1.44 to 1.45.
Step b) The reaction mixture from step a) (" UV syrup") of 15 to 85 wt % was mixed with the other components, such as the conducting salt (0 wt % to 25 wt %, LiTFSI, or LiFSI or LiOTf), 2 to 60 wt % of one of the ionic liquids (EMIM FSI or EMIM TFSI or EMIM OTf or EMIM BF₄ or BMIM-BF₄ or EMIM DCA or EMIM SCA) and plasticizer (0- 20 wt % PEG200), 0-20 wt % PEGMA480 or 4-HBA or 2-CEA, Triazole (0-20 wt %), and 0.055 to 0.15 wt % Irgacure 184 photoinitiator.
Step c) The liquid electrolyte from step b) was coated with a layer thickness ~ 75 µm between two siliconized PET release liners and then irradiated using fluorescent lamps (ACTINIC) wave length of 350 - 400 nm (UV-A). The curing was performed with an intensity of ~ 14 mW/cm² with the residence time in the irradiation tunnel being 260s - 360s. This corresponds to a UV dose from 3600 to 5000 mWs/cm². The following table shows the different compositions:

| Example | UV syrup composition | Liquid electrolyte composition |
|---|---|---|
| 1 | 60 wt % EDGA, | 84.87 wt % UV syrup, |
| | 40 wt % DMAA, | 5 wt % LiTFSI, |
| | 0.0063 wt % Irgacure 651 (added to mixture) | 5 wt % EMIM FSI, |
| | | 5 wt % PEG200 |
| | | 0.13 wt % Irgacure 184 |
| 2 | 70 wt % EDGA, | 77.88 wt % UV syrup, |
| | 30 wt % DMAA, | 7 wt % LiTFSI, |
| | 0.0063 wt % Irgacure 651 (added to mixture) | 15 wt % EMIM FSI, |
| | | 0.12 wt % Irgacure 184 |
| 3 | 60 wt % EDGA, | 42.935 wt % UV syrup, |
| | 40 wt % DMAA, | 20 wt % LiTFSI, |
| | 0.0063 wt % Irgacure 651 (added to mixture) | 37 wt % EMIM FSI, |
| | | 0.065 wt % Irgacure 184 |
| 4 | 60 wt % EDGA, | 42.935 wt % UV syrup, |
| | 40 wt % DMAA, | 20 wt % LiTFSI, |
| | 0.0063 wt % Irgacure 651 (added to mixture) | 37 wt % EMIM OTf, |
| | | 0.065 wt % Irgacure 184 |

| | | |
|---|---|---|
| 5 | 70 wt % EDGA, | 35.945 wt % UV syrup, |
| | 30 wt % DMAA, | 20 wt % LiTFSI, |
| | 0.0063 wt % Irgacure 651 (added to mixture) | 37 wt % EMIM DCA, |
| | | 7 wt % PEG200, |
| | | 0.055 wt % Irgacure 184 |

The liquid electrolytes were then UV cured between two PET release liners to get the final PSAEs.

It is also possible to produce PSAE without using Li salt for the application of electrochromic cells and electrically debondable PSA. For example: PSAE with a composition of 50 wt % UV syrup (made of 70:30 EDGA:DMAA and containing 0.15 wt % Irgacure 184) and 50 wt % EMIM FSI showed an ion conductivity of ~ 10⁻³ S/cm and a switching time of 3 to 5 sec for an EC cell with a charge density of ~ 3 (mC/cm²). This is especially beneficial, since Li salts are expensive and more moisture sensitive.

### Results:

| Example | Ion conductivity [S/cm] |
|---|---|
| 1 | ~ 10⁻⁶ |
| 2 | ~ 10⁻⁵ |
| 3 | ~ 10⁻⁴ |
| 4 | ~ 10⁻⁴ |
| 5 | ~ 10⁻³ |

Examples 1 and 2 are preferred for electrical delamination applications, while examples 2 to 5 are more preferred for electrochromic applications.

Example 3 showed a peel adhesion of around 3.7 N/cm on ASTM steel, a switching time (from color to bleach state or vice versa) of 4 - 6 s for an EC cell with a charge density of ~ 6 (mC/cm²), and an electrical debonding of two ASTM steel plates less than 30 sec at a DC voltage in the range of 5 V - 7 V. The ASTM plates were partially sandwiched by a (2 x 5) cm² PSAE.

Unless otherwise indicated, all measurements were conducted at 23°C and 50% relative humidity. Unless indicated otherwise, moreover, the measurements of the pressure sensitive adhesive electrolyte were carried out on an electrolyte layer with a thickness of 60 to 100 µm, the results for the pressure sensitive adhesive electrolyte typically relate to a layer thickness of ≈ 75 µm.

### Test A - Peel Adhesion

The peel adhesion of the PSAE at an average thickness of 75 µm on ASTM steel plate was measured using a tensile testing machine. One side of PSAE (2 cm width) after removing 1^{st} release liner was laminate to a cleaned ASTM steel plate, and the other side after removing 2^{nd} release liner was laminate on an etched PET film. Then the whole setup was pressed by rolling over five times using a 4 kg roller. The setup was then vertically hooked to the bottom holder of a tensile testing instrument, and the etched PET film was attached to a ribbon-like film that was already hooked to the upper holder of the instrument. For peel adhesion measurement, this ribbon part was pulled off at an angle of 180° with a velocity of 300 mm/min. The maximum force was recorded in N/cm for a complete peel of the PSAE from the steel substrate. The values reported here are the average of three individual measurements.

### Test B - Ionic conductivity

The ionic conductivity, more specifically DC conductivity was measured by EIS (Electrochemical Impedance Spectroscopy) from the log-log plot of real part of the AC conductivity over an angular frequency by extrapolating the plateau region to the zero-frequency using the Dyre fit function. Measurements were done by a BioLogic VMP-300 in the mode of PElS (potentio EIS) with a constant voltage amplitude of 10 mV and a frequency range from 7 MHz to 1 Hz. PSAE sample with a diameter of 10 mm was applied between two circular plate electrodes. The sample thickness was ≈ 75 to 80 µm. The measuring temperature was 25°C.

### Test C - Chronoamperometry

Chronoamperometry measurements were performed using a BioLogic VMP-300 instrument in the voltage range of -1.5 V to 1.5 V. Electrochromic (EC) cell of 16 cm² (4 cm x 4 cm) was constructed for that by sandwiching a PSAE with two electrochromic half cells (as in EP 2 570 846 A1; Macher et al. Adv. Funct. Mater.2020, 30, 1906254; Macher et al. Adv. Mater. Technol. 2021, 6, 2000836) such as one half cell: PB (Prussian Blue) coated on ITO-PET and another half cell: modified PEDOT (poly(3,4-ethylenedioxythiophene) coated on ITO-PET. Then, two copper busbar tape connections were constructed on the ITO side of both EC electrodes to enable the chronoamperometric experiments. The experiment was performed for a duration of 60 s. The charge density (mC/cm²) was determined from the current *vs* time (*I vs t*) plot. The switching time was estimated from the charge density drop as well as by visual inspection.

## Claims

1. Pressure sensitive adhesive electrolyte, prepared by polymerizing a mixture comprising at least the following components:
a. 4 - 86 wt %, of acrylate monomer (a1) from the group of the (meth)acrylic esters having 4 - 44 carbon atoms and containing at least one oxygen atom,
b. 0.5 - 50 wt % of acrylate monomer (a2) from the group of the (meth)acrylic esters or amides having 4 - 25 carbon atoms and containing at least one nitrogen atom,
c. 0.005 - 10 wt % of at least one initiator, wherein the at least one initiator is preferably a thermal initiator and/or a photoinitiator, especially preferably at least one photoinitiator,
d. 0 - 35 wt % of conducting salt,
e. 2 - 60 wt % of ionic liquid,
f. optionally additives like plasticizer, antioxidant, tackifier, chain transfer agent, as for example 0 to 50 wt %,
where optionally one or more of the components are added at least proportionally only during or after the polymerization.

2. Pressure sensitive adhesive electrolyte according to claim 1, **characterized in that** the initiator is a thermal initiator and/or a photoinitiator.

3. Pressure sensitive adhesive electrolyte according to any of claims 1 or 2, **characterized in that** the polymerization is a UV polymerization.

4. Pressure sensitive adhesive electrolyte according to any of claims 1 to 3, **characterized in that** the mixture is free of solvents.

5. Pressure sensitive adhesive electrolyte according to any of claims 1 to 4, **characterized in that** the mixture contains no crosslinker or crosslinking initiator.

6. Pressure sensitive adhesive tape comprising at least one layer of a pressure sensitive adhesive electrolyte according to any of claims 1 to 5, where the pressure sensitive adhesive tape is optionally double-sided adhesive and optionally is an adhesive transfer tape.

7. Roll of product comprising (a) a roll core and (b) in web form, a pressure sensitive adhesive tape according to claim 6, with the pressure sensitive adhesive tape being wound in multiple plies in the form of an Archimedean spiral on the roll core.

8. Method of using the pressure sensitive adhesive electrolyte or an adhesive tape comprising said pressure sensitive adhesive electrolyte according to any of claims 1 to 6 in an energy storage device, like battery or capacitor; sensors like capacitive touch sensors, gas sensors, pressure sensors; as a PSA with electrically delaminate/debonding function, electrochromic display applications; electrochromic wearables like textiles, sunglasses, VR headsets, and watches; electrochromic packaging/labels, smart applications like electrochromic glazing system and electrochromic dimming foil or film.

9. Electrochromic system comprising a first half-cell A and a second half-cell B, with the two half-cells A and B being joined to one another over the full area or a partial area by way of a pressure sensitive adhesive electrolyte or an adhesive tape comprising said pressure sensitive adhesive electrolyte according to any of claims 1 to 6.

10. Method for producing an electrochromic system, comprising joining a first half-cell A and a second half-cell B to one another to form an electrochromic system by lamination of a pressure sensitive adhesive electrolyte tape according to claim 6 or by reactive lamination of liquid electrolyte according to any of claims 1 to 5.

11. Method for selective delamination or debonding by applying a DC voltage beyond the electrochemical stability to pressure sensitive adhesive electrolyte according to any of claims 1 to 5 and thereby decrease the adhesion strength.
